# EUROPEAN PATENT SPECIFICATION

(11) **EP 2 708 402 B1**
(45) Date of publication and mention of the grant of the patent: **04.11.2015**
(21) Application number: 11864939.1
(22) Date of filing: 11.05.2011
(51) Int. Cl.: B60K 11/04, B60H 1/26, B60L 3/00, F01P 11/10, B60H 1/12

(54) **VEHICLE HEAT EXCHANGE STRUCTURE**
WÄRMETAUSCHERKONSTRUKTION FÜR FAHRZEUGE
STRUCTURE D'ÉCHANGE DE CHALEUR DE VÉHICULE

(43) Date of publication of application: 19.03.2014
(73) Proprietor: TOYOTA JIDOSHA KABUSHIKI KAISHA, Toyota-shi, Aichi-ken, 471-8571 (JP)
(72) Inventor: TAMAKOSHI, Koji, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2011/060891
(87) International publication number: WO 2012/153409

(56) References cited:
- WO-A1-2010/097890
- DE-A1- 3 203 927
- JP-A- 2001 020 742
- JP-A- 2001 063 384
- JP-A- 2007 276 546
- US-A- 2 703 680

## Description

### Technical Field

The present invention relates to a vehicle heat exchange structure for cooling a power unit space.

### Background Art

Structures are known in which a radiator is disposed in front of an engine. (See for example Japanese Patent Application Laid-Open (JP-A) No. 2007-069651).

DE 3 203 927 A discloses a vehicle heat exchange structure according to the preamble of claim 1.

### DISCLOSURE OF INVENTION

### Technical Subject

In order to secure cooling performance in challenging environments, radiators are made large and heavy which are excessive with respect to performance demanded under normal conditions.

A subject of the present invention is to obtain a vehicle heat exchange structure as defined by the features of claim 1 that is capable of employing a functional component installed in a vehicle to cool a power unit. Solution to Subject

A vehicle heat exchange structure according to a first aspect of the present invention includes: a heat exchanger that heats air by heat exchange between the air and a heating medium circulating between a power unit and the heat exchanger; and a switching device that switches within plural modes including a first mode that introduces the air that has been heated by the heat exchanger into a vehicle compartment as air conditioning air, and a second mode that expels the air that has been heated by the heat exchanger to outside the vehicle

According to the above aspect, when the switching device is switched to the first mode, air that has been heated by the heat exchanger is introduced to the vehicle compartment as (a portion of) air conditioning air. The vehicle compartment is accordingly air conditioned. When the switching device is switched to the second mode, air that has been heated by heat exchange with the heating medium is expelled to outside the vehicle together with the heat. Accordingly in the second mode, the heat of the power unit is expelled to outside the vehicle through the heating medium and the air, thus achieving cooling of the power unit.

The vehicle heat exchange structure of the above aspect accordingly enables the power unit to be cooled with using the air conditioning heat exchanger that is a functional component installed in the vehicle.

A vehicle heat exchange structure according to a second aspect of the present invention includes: a heat exchanger that heats air by heat exchange between the air and a heating medium circulating between a power unit and the heat exchanger; an air conditioning device that introduces the air that has been heated by the heat exchanger into a vehicle compartment as air conditioning air; an exhaust device that expels the air that has been heated by the heat exchanger to outside the vehicle; and a switching device that switches within plural modes including a first mode in which the air conditioning device functions, and a second mode in which the exhaust device functions.

According to the above aspect, when the switching device is switched to the first mode, air that has been heated by the heat exchanger is introduced into the vehicle compartment as (a portion of) air conditioning air by the air conditioning device. The vehicle compartment is accordingly air conditioned. When the switching device is switched to the second mode, air that has received heat by heat exchange with the heating medium in the heat exchanger is expelled to the outside the vehicle together with the heat by the exhaust device. Accordingly in the second mode, heat of the power unit is expelled to outside the vehicle through the heating medium and air, thus achieving cooling of the power unit.

The vehicle heat exchange structure of the above aspect accordingly enables the power unit to be cooled with using a functional component installed in the vehicle.

In the above aspect, configuration may be made to further include: a radiator that cools liquid coolant by heat exchange with air, the liquid coolant circulates between the power unit and the radiator; and a fan that generates an airflow that passes the radiator and is expelled to outside the vehicle. The exhaust device is configured including a communication portion that communicates a downstream side of an airflow with respect to the heat exchanger with a downstream side of an airflow with respect to the radiator, and the switching device is configured including an opening and closing mechanism that closes off the communication portion in the first mode, and opens up the communication portion in the second mode.

In the above aspect, the liquid coolant and ultimately the power unit is cooled by heat exchange between an airflow passing through the radiator and the liquid coolant. In the second mode, the power unit is also cooled as described above by heat exchange between air and the heating medium using the heat exchanger. The communication portion communicates a downstream side portion of the airflow with respect to the heat exchanger with a downstream side portion of the airflow with respect to the radiator. In an actuated state of the fan, an airflow is generated and passes through the radiator to reach the outside of the vehicle, and the airflow at a radiator side (negative pressure) promotes expulsion of airflow at a heat exchanger side to the outside of the vehicle.

In the above aspect, configuration may be made wherein: the fan is disposed at downstream side of the airflow with respect to the radiator; and the communication portion places a space between the fan and the radiator, and the downstream side of the airflow with respect to the heat exchanger, in communication with each other.

According to the above aspect, the airflow passing through the heat exchanger is directly drawn by the fan into the space between the fan and the radiator, and merges with the airflow at the radiator side and is expelled to outside the vehicle. The expulsion of the airflow at the heat exchanger side, namely the heat of the power unit, to outside the vehicle is accordingly further promoted.

In the above aspect, configuration may be made wherein: the radiator is disposed at rear side in a vehicle front-rear direction of the power unit and at front side in a vehicle front-rear direction of the fan; the heat exchanger is disposed at rear side in a vehicle front-rear direction of the power unit and at upper side in a vehicle up-down direction of the radiator; the air conditioning device is configured including a case and a blower, the case houses the heat exchanger and is formed with an air outlet at a vehicle compartment side, and the blower is disposed inside the case at the opposite side to the air outlet side with respect to the heat exchanger; and the communication portion is configured including an exhaust duct that spans from an exhaust opening to a space between the radiator and the fan, the exhaust opening is formed in the case between the heat exchanger and the air outlet, and the exhaust duct is opened and closed by the opening and closing mechanism.

According to the above aspect, in the first mode air that has flowed inside the case due to the action of the blower is guided into the vehicle compartment through the air outlet after performing heat exchange with the heating medium in the heat exchanger. However, in the second mode, air that has flowed into the case by actuation of the blower is, after heat exchange with the heating medium in the heat exchanger, then guided through the exhaust opening and the exhaust duct, to between the radiator and the fan. In the actuated state of the fan, the air inside the case is directly drawn by the fan, merges with the airflow at the radiator side, and is expelled to outside the vehicle. The layout of the exhaust duct that guides the airflow at the heat exchanger side to between the radiator and the fan is accordingly simple because the radiator is disposed at the rear of the power unit.

In the above aspect, configuration may be made wherein: the air conditioning device is configured including an evaporator that cools air; a case that is partitioned into a first chamber that houses the evaporator, and a second chamber that houses the heat exchanger, and that includes a first air outlet formed in the first chamber, and a second air outlet formed in the second chamber; and an airflow generation device that generates independent airflows of an airflow that passes through the first chamber and an airflow that passes through the second chamber; and wherein the exhaust device is configured including an exhaust duct that expels air from between the heat exchanger and the second air outlet in the second chamber of the case to outside the vehicle, and the switching device is configured including an opening and closing mechanism that opens and closes the exhaust duct.

According to the above aspect, in the first mode air that has flowed into the second chamber of the case by the action of the airflow generation device is, after performing heat exchange with the heating medium in the heat exchanger, guided through the second air outlet into the vehicle compartment. This air is guided into the vehicle compartment after merging with air that has been cooled by performing heat exchange with the evaporator in the first chamber as required. However, in the second mode, air that has flowed into the second chamber of the case due to the action of the airflow generation device is, after performing heat exchange with the heating medium in the heat exchanger, expelled to outside the vehicle through the exhaust duct that has been opened by the opening and closing mechanism. The case is partitioned into the first chamber and the second chamber, and the airflow generation device enables airflows to be independently generated so as to pass through the first chamber and the second chamber respectively. Accordingly, the air conditioning (air conditioner) and cooling of the power unit by the heat exchanger can be achieved together (at the same time) without expelling air that has been cooled by the evaporator to outside the vehicle. Advantageous Effects of Invention

The vehicle heat exchange structure according to the present invention described above has the excellent advantageous effect of enabling a functional component installed in a vehicle to be employed to cool a power unit.

### BRIEF DESCRIPTION OF DRAWINGS

Fig. 1 is a side cross-section illustrating a vehicle heat exchange structure according to a first exemplary embodiment of the present invention;
Fig. 2 is an exploded perspective view illustrating a relevant portion configuring a vehicle heat exchange structure according to the first exemplary embodiment of the present invention;
Fig. 3 is a schematic view illustrating portions controlled by an auxiliary cooler ECU configuring a vehicle heat exchange structure according to the first exemplary embodiment of the present invention;
Fig. 4 is a control table illustrating an example of control modes of an auxiliary cooler ECU configuring a vehicle heat exchange structure according to the first exemplary embodiment of the present invention; and
Fig. 5 is a side cross-section illustrating a vehicle heat exchange structure according to a second exemplary embodiment of the present invention.

### BEST MODE FOR CARRYING OUT THE INVENTION

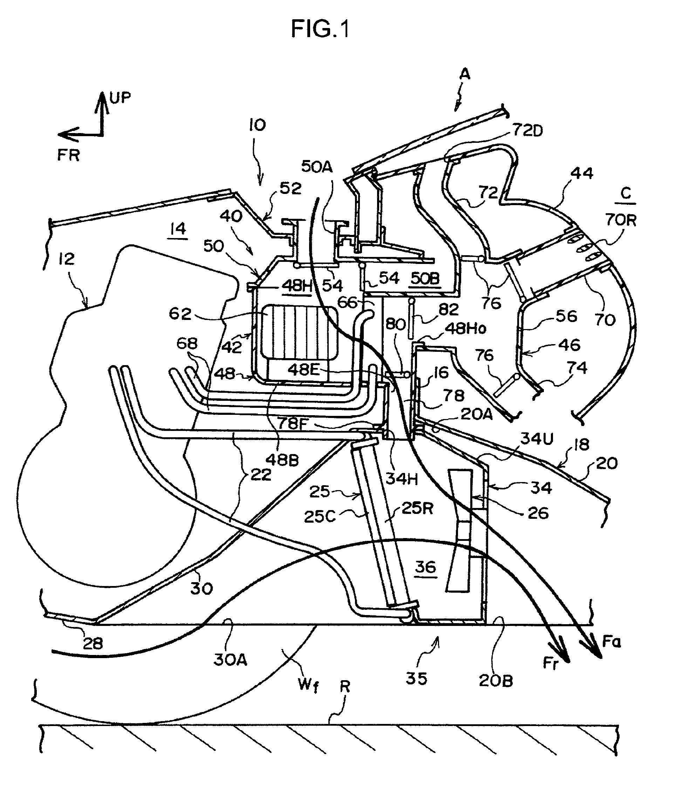

Explanation follows regarding a vehicle heat exchange structure 10 according to a first exemplary embodiment of the present invention, with reference to Fig. 1 to Fig. 4. Explanation will first be given regarding configuration of a front section of a vehicle A applied with the vehicle heat exchange structure 10, followed by explanation of specific configuration of the vehicle heat exchange structure 10. Note that in the drawings, an arrow FR indicates the front direction in the vehicle front-rear direction, an arrow UP indicates the upwards direction in the vehicle up-down direction, and an arrow W indicates the vehicle width direction as appropriate. In the following explanation, where front-rear and up-down directions are employed, these refer to front and rear in the vehicle front-rear direction, and up and down in the vehicle up-down direction, unless explicitly stated otherwise.

### Schematic Configuration of Vehicle Front Section

Fig. 1 is a side cross-section schematically illustrating the front section of the vehicle A that has been applied with the vehicle heat exchange structure 10. As illustrated in Fig. 1, a power unit chamber 14 provided with a power unit 12 is disposed at a front end side of the vehicle A. The power unit 12 of the present exemplary embodiment is configured including an engine that is an internal combustion engine, and an electric motor, respectively serving as drive sources for driving front wheels Wf. The vehicle A is accordingly configured as a hybrid vehicle with two drive sources.

Specifically, the power unit 12 is configured including relevant portions of a horizontally disposed engine with a crankshaft along the vehicle width direction, and a transaxle coupled to the engine so as to be capable of transmitting power. The transaxle is configured including for example an electric motor, a generator, not illustrated in the drawings, a power splitter mechanism, and a transmission that is for example a continuously variable transmission. In the present exemplary embodiment, the transaxle is for example configured including an inverter that is electrically connected to the electric motor, the generator and a battery.

The power unit according to the present exemplary embodiment can accordingly be regarded as a power plant. Note that the transaxle may be configured by a normal transaxle such as a manual transmission (MT), a torque converter type automatic transmission (AT), or a continuously variable transmission (CVT). The power unit chamber 14, in which is disposed the power unit 12 that is configured to include the engine that is an internal combustion engine as described above, may be regarded as what is referred to as an engine room.

A rear end portion of the power unit chamber 14 is configured by a dash panel 16 that separates the power unit chamber 14 from a vehicle compartment C. The dash panel 16 is joined to a front end portion of a floor panel 18. A floor tunnel 20 that forms a downward-opening C-shape in front view cross-section is formed at a vehicle width direction central portion of the floor panel 18. A front end portion of the power unit chamber 14 is configured by a grille and a front bumper (bumper cover), not illustrated in the drawings.

### Radiator Cooling Structure

In the vehicle A applied with the vehicle heat exchange structure 10, a cooling unit 25 is provided so as to block off a front side opening end 20A of the floor tunnel 20. Accordingly, in the present exemplary embodiment, the cooling unit 25 is disposed to the rear side of the power unit 12. The water-cooled cooling unit 25 is configured including at least a radiator 25R that circulates cooling water serving as a liquid coolant between the cooling unit 25 and the engine and electric motor of the power unit 12 so as to cool the power unit 12. In the present exemplary embodiment, the cooling unit 25 is configured further including a condenser 25C that is an air-cooled heat exchanger configuring an air conditioning device 40, described later.

As illustrated in Fig. 1, the radiator 25R is connected to the internal combustion engine portion of the power unit 12 through a radiator hose 22 so as to circulate cooling water. The cooling unit 25 is configured so as to cool the liquid coolant, that is to say, so as to cool the power unit 12, by heat exchange with cooling air. The condenser 25C configures a refrigeration cycle of the air conditioning device 40 with an evaporator 64, described later, a compressor, not illustrated in the drawings, an expansion valve and circulation pipes that circulate air conditioning coolant therebetween.

A fan 26 is provided at a rear side of the cooling unit 25. The fan 26 is configured such that the action of the fan 26 generates an airflow (cooling air) that passes through side air flow paths of the cooling unit 25. Namely, the action of the fan 26 causes cooling air, that performs heat exchange with the cooling water and the air conditioning coolant in the cooling unit 25, to pass through towards the vehicle rear side. After performing heat exchange with the cooling water, the cooling air passes through a downwards facing opening end 20B of the floor tunnel 20 and is expelled to below the floor.

Explanation now follows regarding the vehicle heat exchange structure 10 that guides the cooling air that performs heat exchange with the coolant of the cooling unit 25 (the cooling water that circulates in the radiator 25R and the air conditioning coolant that circulates in the condenser 25C). As illustrated in Fig. 1, the vehicle heat exchange structure 10 includes an under cover 28 that covers the power unit chamber 14 from the lower side. The under cover 28 is formed with an inlet duct 30 that guides air which is generated by travelling and flows between the under cover 28 and a road surface R into the cooling unit 25 (inside the floor tunnel 20). In the present exemplary embodiment, the overall under cover 28, including the inlet duct 30, is integrally formed from resin.

The inlet duct 30 is configured so as to guide air that has been taken up through an air intake port 30A to a rear end side of the inlet duct 30. The intake port 30A opens towards the road surface R in front of the floor tunnel 20 of the under cover 28 and the periphery (excluding a lower portion) of the cooling unit 25 is covered by the opening end 20A of the floor tunnel 20 at the rear end side of the inlet duct 30. In the present exemplary embodiment, the inlet duct 30 is configured with a substantially triangular shape in side view.

As described above, the cooling unit 25 is interposed between the front side opening end 20A of the floor tunnel 20 and the rear end portion of the inlet duct 30. In the present exemplary embodiment, the cooling unit 25 and the fan 26 are integrated by a shroud 34 to configure a cooling module 35. As illustrated in Fig. 1, the cooling unit 25 and the fan 26 are disposed to be separated to each other in the front-rear direction and the shroud 34 covers a cooling air flow path 36 that is a space formed between the cooling unit 25 and the fan 26.

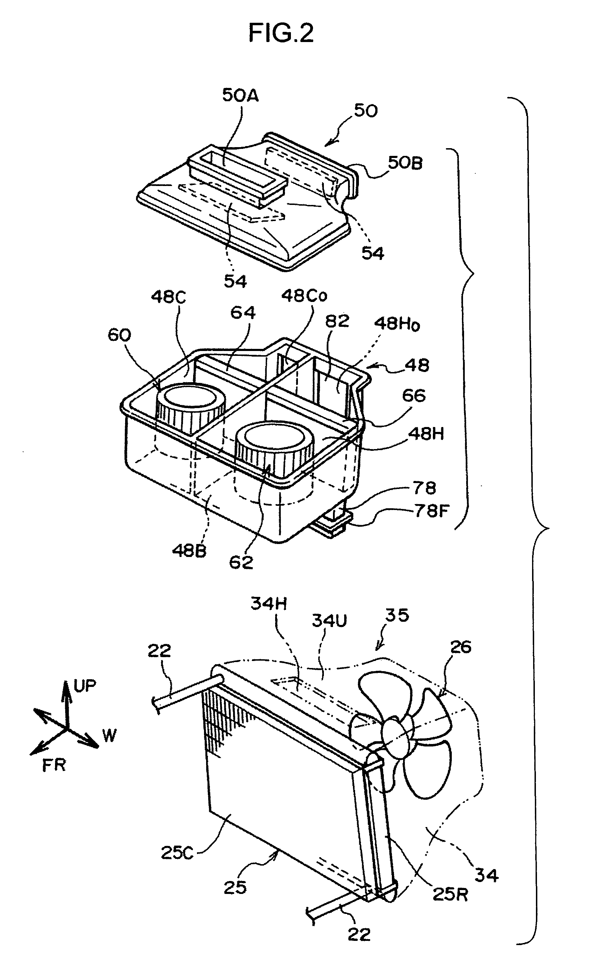

Specifically, the cooling unit 25 is disposed to be inclined towards the front as viewed from the side, such that a vehicle upper end side of the cooling unit 25 is positioned further towards the vehicle front side than a lower end side. The fan 26 is disposed in less inclined manner than the cooling unit 25, or substantially straight upright, in side view. The cooling air flow path 36 between the cooling unit 25 and the fan 26 is accordingly formed with an upper portion that is wider than a lower portion. As illustrated in Fig. 2, configuration is made such that the cooling unit 25 is retained by the shroud 34 so as to block off a front side opening end of the shroud 34, and the fan 26 is supported inside a rear side opening portion of the shroud 34.

The cooling module 35 in which the cooling unit 25, the fan 26 and the shroud 34 are integrated together (made into a subassembly) is disposed in a sealed state between the rear end of the inlet duct 30 and the front side opening end 20A of the floor tunnel 20. Accordingly, in the vehicle heat exchange structure 10, the inlet duct 30 (between the vehicle A and the road surface R) and the floor tunnel 20 are placed in communication with each other through the cooling module 35 (the side air flow paths of the cooling unit 25 including the cooling air flow path 36).

Note that the position of the lower end of the cooling unit 25 that is disposed to be inclined as described above is at substantially the same position in the up-down direction as the rear end of the air intake port 30A, namely the under cover 28. Due to this placement, a flow of air is guided into the side air flow paths of the cooling unit 25 through the inlet duct 30 accompanying travel of the vehicle A. Configuration is made such that cooling air Fr arising from the air due to travelling passes through the air intake port 30A, the inlet duct 30, the cooling unit 25, the cooling air flow path 36 and the floor tunnel 20 (the downwards facing opening end 20B), and is expelled to outside the vehicle. In the vehicle heat exchange structure 10, configuration is made such that the action of the fan 26 also generates the cooling air Fr. Namely, the action of the fan 26 generates the cooling air Fr even when the vehicle A is travelling at low speed or is stationary.

### Air Conditioning Device Configuration

As illustrated in Fig. 1, the air conditioning device 40 is configured including a heat exchange portion 42 disposed at an upper portion of a rear end of the power unit chamber 14, and a blow switching portion 46 provided in an instrument panel 44 that is provided at a vehicle compartment C side. The heat exchange portion 42 is provided with a case 48 that is supported by the dash panel 16 to the front side of the dash panel 16. An upper side opening portion of the case 48 is closed off by a cover 50, illustrated in Fig. 2.

As illustrated in Fig. 1 and Fig. 2, the cover 50 is provided with an external air intake port 50A that is open at a cowl portion 52, and an internal air intake port 50B that opens inside the instrument panel 44. An internal/external air switching damper 54 switches the air that is taken up into the case 48 between either one of, or both, internal air and/or external air.

The case 48 is provided with a dividing wall 58 that projects up along the vehicle front-rear direction and that partitions the inside of the case 48 into a cool air chamber 48C serving as a first chamber and a hot air (warm air) chamber 48H serving as a second chamber, disposed side-by-side in the vehicle width direction. Front portions of the cool air chamber 48C and the hot air chamber 48H are respectively in communication with each of the external air intake port 50A and the internal air intake port 50B such that air can flow in directly thereto through the external air intake port 50A and the internal air intake port 50B.

A rear portion of the case 48 is formed with a cool air outlet 48Co serving as a first air outlet that places the cool air chamber 48C in communication with a header 56 of the blow switching portion 46 through a window portion formed at the dash panel 16. The rear portion of the case 48 is also formed with a hot air (warm air) outlet 48Ho serving as an air outlet or a second air outlet, that places the hot air chamber 48H in communication with the header 56 through a window portion formed at the dash panel 16.

Moreover, the air conditioning device 40 is provided with a first blower 60 disposed at a front portion of the cool air chamber 48C, and a second blower 62 disposed at a front portion of the hot air chamber 48H. When the first blower 60 is actuated, air flows inside the cool air chamber 48C through the external air intake port 50A or the internal air intake port 50B, and a cool airflow is generated and expelled through the cool air outlet 48Co. When the second blower 62 is actuated, air flows inside the hot air chamber 48H through the external air intake port 50A or the internal air intake port 50B, and a hot air flow is generated and expelled through the hot air outlet 48Ho. This combination of the first and second blowers 60, 62 corresponds to an airflow generation device capable of independently generating the cool airflow of the cool air chamber 48C and the hot airflow of the hot air chamber 48H.

The evaporator 64, that together with elements such as the condenser 25C described above configures the refrigeration cycle of the air conditioning device 40, is disposed at an intermediate portion of the cool air chamber 48C. The evaporator 64 is configured so as to cool the cool airflow by removing latent heat of evaporation of the air conditioning coolant from the cool airflow. A heater core 66, serving as a heat exchanger of the present invention, is disposed at an intermediate portion of the hot air chamber 48H.

The heater core 66 is connected through a heater core hose 68 to (the internal combustion engine portion of) the power unit 12 such that cooling water, serving as a heating medium, is capable of circulating therebetween. The heater core 66 is configured so as to heat (increase the temperature of) the hot airflow by discharging heat from the cooling water to the hot airflow. Namely, the heater core 66 configures a heat exchanger between the hot airflow passing through the hot air chamber 48H and the circulating cooling water.

In the air conditioning device 40, configuration is made such that the cool airflow from the cool air chamber 48C and the hot airflow from the hot air chamber 48H are mixed together inside the header 56, thereby regulating air conditioning air that is blown into the vehicle compartment C at an appropriate temperature. The header 56 is connected to a center duct 70 that is connected to a center register 70R, a defroster duct 72 that is connected to a defroster 72D, a foot duct 74 that is connected to a foot duct, not illustrated in the drawings, and a side duct, not illustrated in the drawings, that is connected to a side register, also not illustrated in the drawings. Blow position switching dampers 76 are provided at connection portions of each of the ducts 70, 72, 74 so as to be capable of opening and closing each of the ducts 70, 72, 74.

In summary, the air conditioning device 40 is configured so as to regulate the temperature of air taken up into the case 48 from the external air intake port 50A and/or the internal air intake port 50B using at least one out of the evaporator 64 and the heater core 66, and to blow the air out into the vehicle compartment C through the blow switching portion 46.

Power Unit Cooling Structure configured by Heater Core The vehicle heat exchange structure 10 is configured with plural selectable modes, including an air conditioning mode serving as a first mode that heats (a portion of) air conditioning air with the heater core 66, and a cooler mode serving as a second mode that cools (assists cooling of) the power unit 12 with the heater core 66. In the air conditioning mode, the heater core 66 functions as a configuration component of the air conditioning device 40 as described above. Explanation follows below regarding the configuration for performing the cooler mode.

As illustrated in Fig. 1, a portion of a bottom wall 48B of the case 48 configures a bottom of the hot air chamber 48H and the portion is formed with an exhaust opening 48E at the rear of the heater core 66 and to the front of the hot air outlet 48Ho. An exhaust duct 78 projects downwards from a peripheral edge of the exhaust opening 48. The exhaust duct 78 serves as a communication portion and has a communication path configured at the inside thereof. A lower side opening end of the exhaust duct 78 is inserted inside a through hole 34H that is formed in an upper wall 34U of the shroud 34. At the outside of the exhaust duct 78, the through hole 34H is covered and closed off by a flange 78F that juts out from the exhaust duct 78.

The through hole 34H is formed between the cooling unit 25 (radiator 25R) and the fan 26 so as to open into the cooling air flow path 36. The exhaust duct 78 places the hot airflow from the heater core 66 in communication with the cooling air Fr from the radiator 25R. Specifically, a downstream side portion in a flow direction of the hot airflow from the heater core 66 inside the hot air chamber 48H is made in communication with a downstream side portion in a flow direction of the cooling air Fr from the radiator 25R inside the floor tunnel 20 each other.

The case 48 is provided with an exhaust damper 80 serving as an opening and closing mechanism that opens and closes the exhaust opening 48E, namely the exhaust duct 78. In a state in which the exhaust opening 48E has been in an open state by the exhaust damper 80, an airflow can be generated that flows into the hot air chamber 48H, takes heat from the cooling water in the heater core 66, and is expelled to outside the vehicle from the opening end 20B of the floor tunnel 20 through the exhaust duct 78, and the fan 26. This airflow is referred to as auxiliary cooling air Fa (see Fig. 1). In the present exemplary embodiment, configuration is made such that the auxiliary airflow Fa is generated by actuating at least one of the second blower 62 and the fan 26.

In the vehicle heat exchange structure 10, the hot air outlet 48Ho is provided with an openable and closable air conditioning side damper 82. As described above, the vehicle heat exchange structure 10 is accordingly configured such that selection can be made between the air conditioning mode that selectively guides the hot airflow into the vehicle compartment C and the cooler mode that selectively exhausts the hot airflow to outside the vehicle.

In the present exemplary embodiment, in addition to the air conditioning mode and the cooler mode described above, configuration is also made in which a combination mode can be selected. In the combination mode, a portion of the hot airflow is guided into the vehicle compartment C and another portion (the remainder of) the hot airflow is exhausted to outside the vehicle (utilizing both the first mode and the second mode). A heater OFF mode in which heat exchange is not performed by the heater core 66 can also be selected in the vehicle heat exchange structure 10.

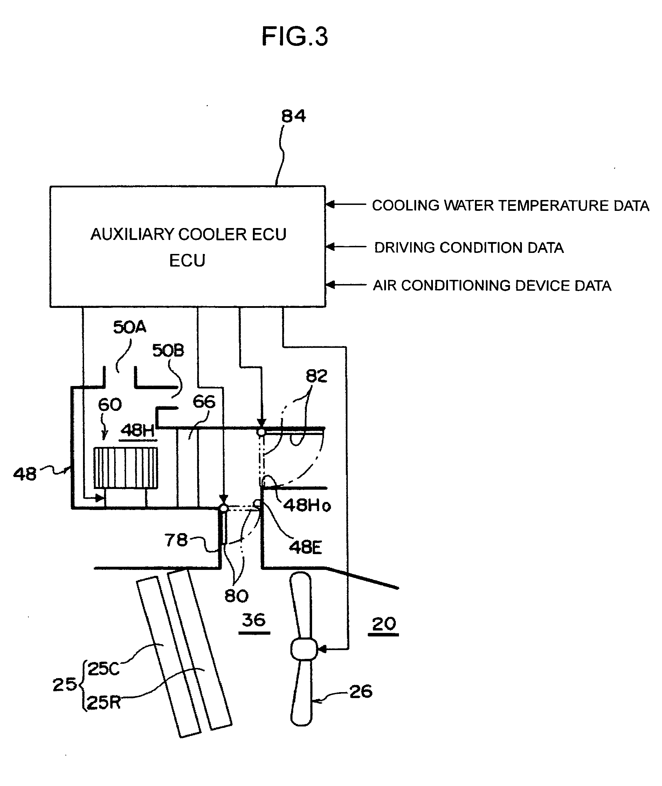

As illustrated in Fig. 3, the vehicle heat exchange structure 10 is further provided with an auxiliary cooler ECU 84 serving as a control device. The auxiliary cooler ECU 84 is configured so as to be input with a detected water temperature of the cooling water circulating in the radiator hose 22, a driving state of the vehicle A (for example travel position gradient data from the amount of accelerator opening and a navigation device), and data from an air conditioning ECU that controls the air conditioning device 40. The auxiliary cooler ECU 84 controls the second blower 62, the fan 26, the exhaust damper 80 and the air conditioning side damper 82 based on these data. This control will be explained together with the operation of the present exemplary embodiment.

In the present exemplary embodiment described above, the auxiliary cooler ECU 84, the air conditioning side damper 82 and the exhaust damper 80 correspond a switching device of the present invention. The exhaust duct 78, the floor tunnel 20 (shroud 34) and at least one out of the second blower 62 and the fan 26 correspond to an exhaust device of the present invention.

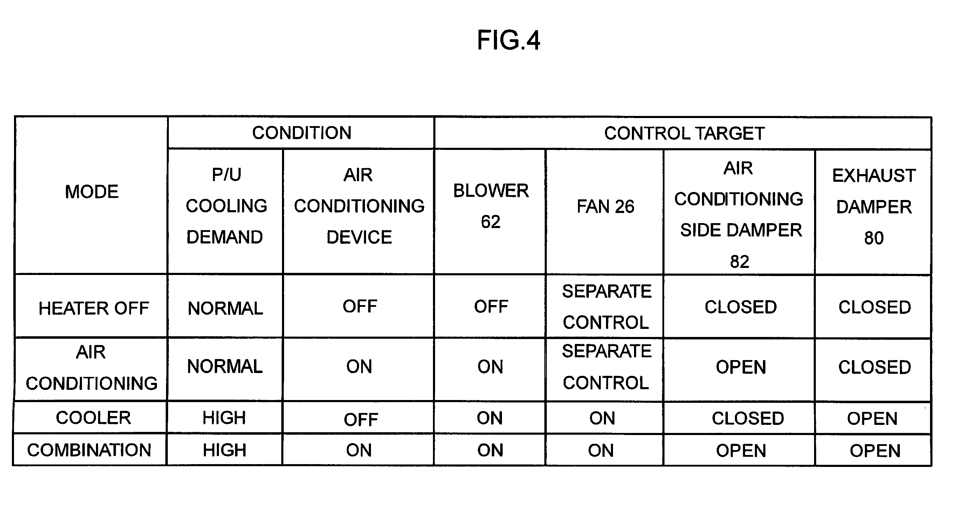

Explanation follows regarding operation of the first exemplary embodiment, with reference to the control table illustrated in Fig. 4.

In the vehicle A applied with the vehicle heat exchange structure 10, demand for cooling of the power unit 12 is considered normal during usual travel. In such cases, the power unit 12 is cooled by the cooling water circulating between the power unit 12 and the radiator 25R. Accordingly, as illustrated in Fig. 4, the exhaust duct 78 is closed off by the exhaust damper 80, and the fan 26 is controlled separately.

Supplementary explanation follows regarding this control. When the auxiliary cooler ECU 84, or another ECU, has determined that a travel speed of the vehicle A is a specific vehicle speed or below, and the cooling water temperature is a specific temperature or above, the fan 26 is actuated. When this is performed, air below the floor flows in through the air intake port 30A as the cooling air Fr due to the suction force of the fan 26. However, when it has been determined that the travel speed of the vehicle A has exceeded the specific vehicle speed, the fan 26 is stopped. When this is performed, the air due to travelling under the floor of the vehicle A flows in through the air intake port 30A as the cooling air Fr. Cooling of the power unit 12 by the radiator 25R is accordingly performed by heat exchange between the cooling water and either cooling air Fr caused due to travelling of the vehicle A, or cooling air Fr generated by the action of the fan26.

### Heater OFF Mode

The heater OFF mode is defined as heat exchange by the heater core 66 is not required because demand for cooling of the power unit 12 is normal, as described above, and actuation of the air conditioning device 40 has been stopped (turned OFF). In the heater OFF mode, the second blower 62 is stopped, and the air conditioning side damper 82 is situated at a position closing off the hot air outlet 48Ho. The exhaust damper 80 is situated at a position closing off the exhaust duct 78. Accordingly, no hot airflow is generated in the hot air chamber 48H. Note that in such cases, configuration may be made so as to stop the circulation of cooling water through the heater core hose 68.

In cases in which rapid cooling by the air conditioning device 40 is demanded, the fan 26, the second blower 62, the air conditioning side damper 82 and the exhaust damper 80 are controlled similarly to in the heater OFF mode. In such cases, (the refrigeration cycle of) the air conditioning device 40 and the first blower 60 are actuated, and only cool airflow that has been cooled by the evaporator 64 is supplied into the vehicle compartment C.

### Air Conditioning Mode

The air conditioning mode includes cases in which demand for cooling of the power unit 12 is normal, and the air conditioning device 40 is actuated (turned ON), namely cases in which heating of the air conditioning air by at least the heater core 66 is demanded regardless of whether or not the air conditioning air is to be mixed with a cool airflow. In the air conditioning mode, the second blower 62 is actuated, and the air conditioning side damper 82 is situated at a position opening up the hot air outlet 48Ho of the case 48. The exhaust damper 80 is situated at a position closing off the exhaust duct 78.

A hot airflow heated by passing the heater core 66 inside the hot air chamber 48H is accordingly guided to the vehicle compartment C through the header 56 of the blow switching portion 46. In the header 56 the hot airflow is mixed as necessary with a cool airflow cooled by passing the evaporator 64 inside the cool air chamber 48C, and the temperature regulated air conditioning air is guided into the vehicle compartment C.

Explanation follows regarding control when demand for cooling of the power unit 12 is high, for example when in heavy traffic or when ascending a long uphill slope, namely when there is demand for cooling performance that exceeds the cooling performance of the radiator 25R.

### Cooler Mode

Firstly, the cooler mode includes cases in which demand for cooling of the power unit 12 is high and actuation of the air conditioning device 40 has been stopped (turned OFF), with cooling of the power unit 12 performed by the heater core 66. In the cooler mode, the second blower 62 and the fan 26 are actuated. The air conditioning side damper 82 is situated at a position that closes off the hot air outlet 48Ho, and the exhaust damper 80 is situated at a position that opens up the exhaust duct 78.

Accordingly, cooling air that cools the power unit 12 with the heater core 66 is generated in addition to the cooling air Fr that flows in through the inlet duct 30, passes the cooling unit 25, and is expelled to outside the vehicle through the floor tunnel 20. This cooling air flows into the case 48 from the outside the vehicle or inside the vehicle, passes the heater core 66, the exhaust duct 78, the shroud 34 and the floor tunnel 20 and is expelled to outside the vehicle through the downwards facing opening end 20B of the floor tunnel 20. In the vehicle heat exchange structure 10 the heater core 66 can accordingly also function as a sub (auxiliary) radiator.

When demand for cooling of the power unit 12 is high and when rapid cooling by the air conditioning device 40 is also demanded, the fan 26, the second blower 62, the air conditioning side damper 82 and the exhaust damper 80 are controlled similarly to in the cooler mode. In such cases, the (refrigeration cycle of the) air conditioning device 40 and the first blower 60 are actuated and only a cooling air flow that has been cooled by the evaporator 64 is supplied to the vehicle compartment C.

### Combination Mode

The combination mode includes cases in which demand for cooling of the power unit 12 is high, and when the air conditioning device 40 has been actuated (turned ON), namely when there is at least a demand for heating of the air conditioning air by the heater core 66 regardless of whether or not the air conditioning air is to be mixed with a cool airflow. In the combination mode, the second blower 62 and the fan 26 are actuated. The air conditioning side damper 82 is situated at a position that opens up the hot air outlet 48Ho, and the exhaust damper 80 is situated at a position that opens up the exhaust duct 78.

A portion of the hot airflow that has been heated as it passes the heater core 66 inside the hot air chamber 48H is guided into the vehicle compartment C as (a portion of) air conditioning air, and the remaining portion is expelled to outside the vehicle. Namely, a portion of the hot airflow corresponding to the air conditioning requirements (a portion of the heat from the power unit 12 to be utilized) is guided into the vehicle compartment C past the header 56 of the blow switching portion 46. In the header 56, the hot airflow is mixed with the cool airflow that has been cooled by passing through the evaporator 64 inside the cool air chamber 48C as demanded, and the temperature regulated air conditioning air is guided into the vehicle compartment C. The remaining hot airflow, namely a portion of the heat from the power unit 12 to be discharged, passes the exhaust duct 78, the shroud 34, and the floor tunnel 20 to be expelled to outside the vehicle from the downwards facing opening end 20B of the floor tunnel 20 similarly to in the cooler mode described above. In the vehicle heat exchange structure 10, the heater core 66 can accordingly be made to function as a sub radiator even when there is a demand for air conditioning (a demand for heating).

As described above, in the vehicle heat exchange structure 10, the heater core 66 that is a functional component performing, when in the air conditioning mode, air conditioning of the vehicle compartment can also function as a sub radiator to achieve the cooler mode. A reduction in size and weight of the radiator 25R can accordingly be achieved. Namely, a radiator of a Comparative Example needs to satisfy demand by itself even when there is a high demand for cooling of the power unit 12 and the radiator becomes excessively large and heavy with respect to the normal demand for cooling performance.

However, in the vehicle heat exchange structure 10, due to employing the heater core 66 as a sub radiator when there is high demand for cooling of the power unit 12, the radiator 25R can be configured with a size (capacity) corresponding to the cooling performance required in order to meet normal demand. The radiator can accordingly be made smaller and more lightweight than in the Comparative Example described above.

In the vehicle heat exchange structure 10, in the cooler mode and the combination mode, (a portion of) the hot airflow that has passed the heater core 66 is merged with the cooling air Fr that cools the power unit 12 with the radiator 25R. Negative pressure generated by the cooling air Fr can be utilized to generate a stronger (higher flow rate) hot airflow than would be generated by the action of the second blower 62 alone. Accordingly, the heat exchange amount between the cooling water and the hot airflow in the heater core 66 in the cooler mode and the combination mode is increased and heat of the power unit 12 is effectively discharged by the heater core 66. In particular, in the vehicle heat exchange structure 10 (a portion of) the hot airflow that has passed the heater core 66 is merged with the cooling air flow path 36 between the radiator 25R and the fan 26. The hot airflow is accordingly drawn towards the floor tunnel 20 side directly by the negative pressure of the fan 26, contributing to a further increase in the heat exchange amount of (amount of heat discharged by) the hot airflow.

In the vehicle heat exchange structure 10, the radiator 25R is disposed at the rear of the power unit 12n, the layout of the exhaust duct 78 guiding the hot airflow to a space between the radiator 25R and the fan 26 is accordingly simple after the hot airflow has passed the heater core 66. Namely, the exhaust duct 78 that extends downwards from the case 48 can merge the hot airflow with the cool airflow Fr between the radiator 25R and the fan 26.

Moreover, in the vehicle heat exchange structure 10 the radiator 25R is disposed at the rear of the power unit 12. The cool airflow Fr that has been heated by the cooling water in the radiator 25R accordingly does not contact with the power unit 12. This accordingly contributes to suppressing a reduction in the cooling performance for cooling of the power unit 12.

In the vehicle heat exchange structure 10, the case 48 configuring the air conditioning device 40 is partitioned into the cool air chamber 48C and the hot air chamber 48H, and the first blower 60 and the second blower 62 that independently generate the cool airflow and the hot airflow are provided inside the cool air chamber 48C and the hot air chamber 48H. The air conditioning side damper 82 that is capable of closing off the hot air outlet 48Ho of the hot air chamber 48H is also provided. Accordingly, as in the explanation of the cooler mode given above, in cases in which there is a high demand for cooling of the power unit 12 and also demand for rapid cooling, cooling of the vehicle compartment C can be performed by the evaporator 64 whilst employing the heater core 66 as a sub radiator.

### Second Exemplary Embodiment

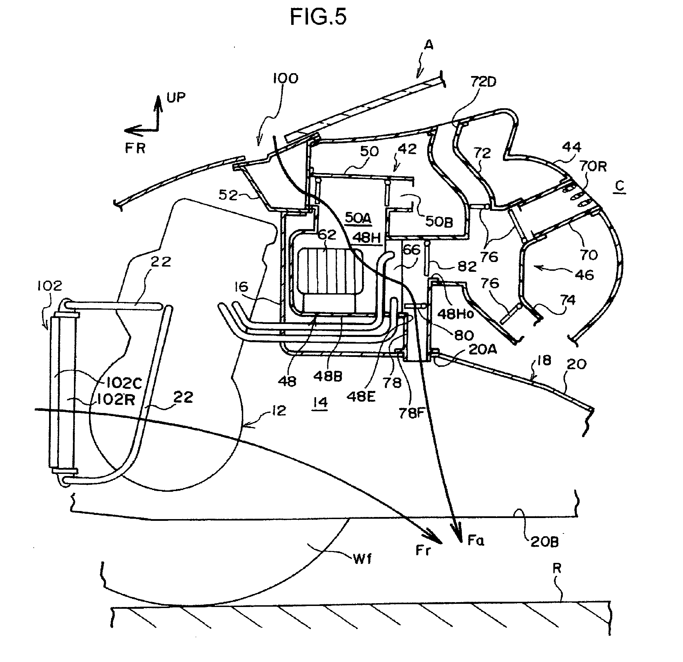

Next, explanation follows regarding a vehicle heat exchange structure 100 according to a second exemplary embodiment of the present invention with reference to Fig. 5. Note that components and portions that are of the same basic configuration as those of the first exemplary embodiment are allocated the same reference numerals as in the first exemplary embodiment. Further explanation and illustration thereof is omitted.

As illustrated in Fig. 5, the vehicle heat exchange structure 100 is provided with a cooling unit 102 disposed in front of the power unit 12 in place of the cooling unit 25 disposed at the rear of the power unit 12. The cooling unit 102 is configured including a radiator 102R and a condenser 102C. Although not illustrated in the drawings, a fan unit of front-rear flattened profile is installed at a back face side (power unit 12 side) of the cooling unit 102.

The radiator 102R is connected to the internal combustion engine portion of the power unit 12 through the radiator hose 22 so as to be capable of circulating cooling water therebetween. Configuration is made such that cooling air that has passed the radiator 102R is expelled to outside the vehicle below the power unit chamber 14 and through the downwards facing opening end 20B of the floor tunnel 20. The cooling air is generated by air due to travelling that flows in through for example a grille, not illustrated in the drawings, or forced air due to the action of a fan unit, not illustrated in the drawings.

The overall of the air conditioning device 40 including the case 48 is disposed (at the vehicle compartment side) between the dash panel 16 and the instrument panel 44. The air conditioning device 40 side exhaust duct 78 is in communication with the inside of the floor tunnel 20. A hot airflow that serves as auxiliary cooling air when the heater core 66 is being employed as a sub radiator is configured so as to be expelled to outside the vehicle through the downwards facing opening end 20B of the floor tunnel 20. Other configurations of the vehicle heat exchange structure 100, including portions not illustrated in the drawings, are similar to corresponding configurations of the vehicle heat exchange structure 10.

The vehicle heat exchange structure 100 of the second exemplary embodiment has basically the same operation, enabling basically the same advantageous effects to be obtained as in the vehicle heat exchange structure 10 of the first exemplary embodiment. However, this excludes operation and advantageous effects obtained due to disposing the cooling unit 25 at the rear of the power unit 12, and operation and advantageous effects obtained due to merging the hot airflow in the cooling air flow path 36 between the radiator 25R and the fan 26.

Note that in the configuration of the vehicle heat exchange structure 100, in the event that configuration is made such that cooling air that has passed the cooling unit 102 is expelled from the downwards facing opening end 20B of the floor tunnel 20, the hot airflow will be able to be strengthened by negative pressure arising due to the cooling air in the cooler mode and the combination mode. Such a configuration can be achieved by for example, covering a lower portion of the power unit chamber 14 with an under cover.

In each of the exemplary embodiments described above, examples have been given wherein the exhaust damper 80 and the air conditioning side damper 82 only open and close the exhaust duct 78 and the hot air outlet 48Ho, however the present invention is not limited thereto. For example, configuration may be made such that the degree of opening of either one, or both, of the exhaust damper 80 and the air conditioning side damper 82 can be regulated according to the demanded flow rate (distribution amount) of the hot airflow.

Moreover, in each of the exemplary embodiments described above, examples have been given wherein the case 48 is partitioned into the cool air chamber 48C and the hot air chamber 48H, however the present invention is not limited thereto. For example, configuration may be made wherein in the cooler mode and the combination mode, cool airflow that has been cooled by the evaporator 64 is guided to the heater core 66, increasing cooling performance for the power unit 12.

In each of the exemplary embodiments described above, examples have been given wherein the vehicle heat exchange structure 10 (auxiliary cooler ECU 84) is capable of performing the combination mode, however the present invention is not limited thereto. Namely, in the present invention, it is sufficient to have a configuration that enables at least the first mode of the air conditioning mode, and the second mode of the cooler mode.

Moreover, in each of the exemplary embodiments described above, the path through which cooling water circulates between the power unit 12 and the radiator 25R and the path through which cooling water circulates between the power unit 12 and the heater core 66 are provided as independent circulation paths, however the present invention is not limited thereto. For example, configuration may be made wherein the radiator 25R and the heater core 66 are disposed in parallel on a common (partially common) cooling water circulation path.

In each of the exemplary embodiments described above, the power unit 12 including the internal combustion engine and the motor is disposed inside the power unit chamber 14 positioned at the front of the vehicle compartment C, however the present invention is not limited thereto. For example, configuration may be made wherein the power unit 12 does not include the motor (a vehicle with an engine such as a general FF vehicle, FR vehicle, or 4WD vehicle), configuration may be made wherein the power unit 12 including the internal combustion engine is disposed in a power unit chamber positioned at the rear of the vehicle compartment C, or configuration may be made wherein the power unit does not include an internal combustion engine.

Moreover, in each of the exemplary embodiments described above, the power unit 12 is configured including the electric motor, the generator, not illustrated in the drawings, the power splitting mechanism, and the transmission that is for example a continuously variable transmission, however the present invention is not limited thereto, and various modifications may be made. For example, the transaxle configuring the power unit 12 may be configured by a normal transaxle such as a manual transmission (MT), an automatic transmission (AT) such as a torque type automatic transmission, or a continuously variable transmission (CVT). Such transaxles may also be treated as elements not included in the power unit 12 (the power unit may be treated as being configured by drive source such as an engine as a main component).

The present invention is also not limited by the exemplary embodiments described above in other respects, and obviously various modifications thereto may be implemented within the present invention.

## Claims

1. A vehicle heat exchange structure (10; 100) comprising:
a heat exchanger (66) that heats air by heat exchange between the air and a heating medium circulating between a power unit (12) which is cooled by a radiator (25R; 102R) and the heat exchanger (66);
an air conditioning device (40) that introduces the air that has been heated by the heat exchanger (66) into a vehicle compartment (C) as air conditioning air;
a radiator (25R; 102R) that cools liquid coolant by heat exchange with air, the liquid coolant circulating between the power unit (12) and the radiator (25R; 102R); and
a fan (26) that generates an airflow (Fr) that passes the radiator (25R; 102R) and is expelled to outside the vehicle (A);
an exhaust device (78, 20, 34, 62, 26) that comprises a communication portion (78) that communicates a downstream side of an airflow (Fa) with respect to the heat exchanger (66) with a downstream side of an airflow (Fr) with respect to the radiator (25R; 102R), and that expels the air that has been heated by the heat exchanger (66) to outside the vehicle (A); and
a switching device (80, 82, 84) that switches within a plurality of modes including a first mode in which the air conditioning device (40) functions, and a second mode in which the exhaust device (78, 20, 34, 62, 26) functions and that comprises an opening and closing mechanism (80) that closes off the communication portion (78) in the first mode, and opens up the communication portion (78) in the second mode,
**characterized in that** the path through which liquid coolant circulates between the power unit (12) and the radiator (25R; 102R) and the path through which heating medium circulates between the power unit (12) and the heat exchanger (66) are provided as independent circulating paths.

2. The vehicle heat exchange structure (10) of claim 1, wherein:
the fan (26) is disposed to downstream side of the airflow (Fr) with respect to the radiator (25R); and
the communication portion (78) places a space (36) between the fan (26) and the radiator (25R), and the downstream side of the airflow (Fa) with respect to the heat exchanger (66), in communication with each other.

3. The vehicle heat exchange structure (10) of claim 1 or claim 2, wherein:
the radiator (25R) is disposed at rear side in a vehicle front-rear direction of the power unit (12) and at front side in the vehicle front-rear direction of the fan (26);
the heat exchanger (66) is disposed at rear side in a vehicle front-rear direction of the power unit (12) and at upper side in a vehicle up-down direction of the radiator (25R);
the air conditioning device (40) comprises a case (48) and a blower (60; 62), the case (48) houses the heat exchanger (66) and is formed with an air outlet (48Co; 48Ho) at a vehicle compartment side, and the blower (60; 62) is disposed inside the case (48) at the opposite side to the air outlet side with respect to the heat exchanger (66); and
the communication portion (78) comprises an exhaust duct that spans from an exhaust opening (48E) to a space (36) between the radiator (25R) and the fan (26), the exhaust opening (48E) is formed in the case (48) between the heat exchanger and the air outlet (48Co; 48Ho), and the exhaust duct is opened and closed by the opening and closing mechanism (80).

4. The vehicle heat exchange structure (10; 100) of any of claim 1 to 3, wherein the air conditioning device (40) is configured including an evaporator which is configured to cool an airflow and a heater core (66) which is configured to heat an airflow.

## Patentansprüche

1. Fahrzeugwärmeaustauschstruktur (10; 100), aufweisend:
einen Wärmetauscher (66), der Luft durch einen Wärmeaustausch zwischen der Luft und einem Heizmedium, das zwischen einer Leistungseinheit (12), die durch einen Kühler (25R; 102R) gekühlt wird, und dem Wärmetauscher (66) zirkulieren gelassen wird, erwärmt;
eine Klimatisierungsvorrichtung (40), die die Luft, die durch den Wärmetauscher (66) erwärmt wurde, in einen Fahrzeugraum (C) als Klimatisierungsluft einleitet;
einen Kühler (25R; 102R), der ein flüssiges Kühlmittel durch einen Wärmeaustausch mit Luft kühlt, wobei das flüssige Kühlmittel zwischen der Leistungseinheit (12) und dem Kühler (25R; 102R) zirkulieren gelassen wird; und
einen Lüfter (26), der einen Luftstrom (Fr), der durch den Kühler (25R; 102R) hindurchgeht und zu einer Außenseite des Fahrzeugs (A) ausgestoßen wird, erzeugt;
eine Entlüftungsvorrichtung (78, 20, 34, 62, 26), die einen Verbindungsabschnitt (78) aufweist, der eine stromabwärts gelegene Seite eines Luftstroms (Fa) mit Bezug auf den Wärmetauscher (66) mit einer stromabwärts gelegenen Seite eines Luftstroms (Fr) mit Bezug auf den Kühler (25R; 102R) verbindet, und der die Luft, die durch den Wärmetauscher (66) erwärmt wurde, an eine Außenseite des Fahrzeugs (A) ausstößt; und
eine Schaltvorrichtung (80, 82, 84), die innerhalb einer Vielzahl an Modi, die einen ersten Modus, in dem die Klimatisierungsvorrichtung (40) in Betrieb ist, und einen zweiten Modus, in dem die Entlüftungsvorrichtung (78, 20, 34, 62, 26) in Betrieb ist, enthält, schaltet, und die einen Öffnungs- und Schließmechanismus (80), der den Verbindungsabschnitt (78) in dem ersten Modus absperrt und der den Verbindungsabschnitt (78) in dem zweiten Modus öffnet, aufweist;
**dadurch gekennzeichnet, dass** der Pfad, durch den ein flüssiges Kühlmittel zwischen der Leistungseinheit (12) und dem Kühler (25R; 102R) zirkulieren gelassen wird, und der Pfad, durch den ein Heizmedium zwischen der Leistungseinheit (12) und dem Wärmeaustauscher (66) zirkulieren gelassen wird, als unabhängige Zirkulationspfade bereitgestellt sind.

2. Fahrzeugwärmeaustauschstruktur (10) nach Anspruch 1, wobei:
der Lüfter (26) an einer stromabwärts gelegenen Seite des Luftstroms (Fr) mit Bezug auf den Kühler (25R) angeordnet ist; und
der Verbindungsabschnitt (78) einen Raum (36) zwischen dem Lüfter (26) und dem Kühler (25R), und die stromabwärts gelegene Seite des Luftstroms (Fa) mit Bezug auf den Wärmetauscher (66) miteinander in Verbindung setzt.

3. Fahrzeugwärmeaustauschstruktur (10) nach Anspruch 1 oder Anspruch 2, wobei:
der Kühler (25R) in einer Fahrzeugrichtung nach vorne und hinten an einer Hinterseite der Leistungseinheit (12) und in der Fahrzeugrichtung nach vorne und hinten an einer Vorderseite des Lüfters (26) angeordnet ist;
der Wärmetauscher (66) in einer Fahrzeugrichtung nach vorne und hinten an einer Hinterseite der Leistungseinheit (12) und in einer Fahrzeugrichtung nach oben und unten an einer Oberseite des Kühlers (25R) angeordnet ist;
die Klimatisierungsvorrichtung (40) ein Gehäuse (48) und eine Blaseinrichtung (60; 62) aufweist, wobei das Gehäuse (48) den Wärmetauscher (66) unterbringt und mit einem Luftauslass (47Co; 48Ho) an einer Fahrzeugraumseite gebildet ist, und die Blaseinrichtung (60; 62) innerhalb des Gehäuses (48) an der zu der Luftauslassseite entgegengesetzten Seite mit Bezug auf den Wärmetauscher (66) angeordnet ist; und
der Verbindungsabschnitt (78) ein Entlüftungsrohr aufweist, das sich von einer Entlüftungsöffnung (48E) bis zu einem Raum (36) zwischen dem Kühler (25R) und dem Lüfter (26) erstreckt, wobei die Entlüftungsöffnung (48E) in dem Gehäuse (48) zwischen dem Wärmetauscher und dem Luftauslass (48Co; 48Ho) gebildet ist, und das Entlüftungsrohr durch den Öffnungs- und Schließmechanismus (80) geöffnet und geschlossen wird.

4. Fahrzeugwärmeaustauschstruktur (10; 100) nach einem der Ansprüche 1 bis 3, wobei die Klimatisierungsvorrichtung (40) konfiguriert ist, um einen Verdampfer, der konfiguriert ist, um einen Luftstrom zu kühlen, und ein Heizelement (66), das konfiguriert ist, um einen Luftstrom zu erwärmen, zu enthalten.

## Revendications

1. Structure (10 ; 100) d'échange de chaleur de véhicule comprenant :
un échangeur de chaleur (66) qui chauffe de l'air par échange de chaleur entre l'air et un agent chauffant circulant entre une unité motrice (12) qui est refroidie par un radiateur (25R ; 102R) et l'échangeur de chaleur (66) ;
un dispositif (40) de climatisation qui introduit dans un compartiment de véhicule (C) l'air qui a été chauffé par l'échangeur de chaleur (66) en tant qu'air de climatisation ;
un radiateur (25R ; 102R) qui refroidit un agent de refroidissement liquide par échange de chaleur avec l'air, l'agent de refroidissement liquide circulant entre l'unité motrice (12) et le radiateur (25R ; 102R) ; et
un ventilateur (26) qui engendre un écoulement d'air (Fr) qui traverse le radiateur (25R ; 102R) et qui est expulsé à l'extérieur du véhicule (A) ;
un dispositif (78, 20, 34, 62, 26) d'évacuation qui comprend une section (78) de communication qui met en communication le côté aval, par rapport à l'échangeur de chaleur (66), d'un écoulement d'air (Fa) avec le côté aval, par rapport au radiateur (25R ; 102R), d'un écoulement d'air (Fr), et qui expulse à l'extérieur du véhicule (A) l'air qui a été chauffé par l'échangeur de chaleur (66) ; et
un dispositif (80, 82, 84) de commutation qui commute entre une pluralité de modes incluant un premier mode dans lequel le dispositif (40) de climatisation fonctionne, et un second mode dans lequel le dispositif (78, 20, 34, 62, 26) d'évacuation fonctionne et qui comprend un mécanisme (80) d'ouverture et de fermeture qui ferme la section (78) de communication dans le premier mode, et qui ouvre la section (78) de communication dans le second mode,
**caractérisée en ce que** le chemin par lequel l'agent de refroidissement liquide circule entre l'unité motrice (12) et le radiateur (25R ; 102R) et le chemin par lequel l'agent chauffant circule entre l'unité motrice (12) et l'échangeur de chaleur (66) sont réalisés sous forme de chemins de circulation indépendants.

2. Structure (10) selon la revendication 1 d'échange de chaleur de véhicule,
dans laquelle le ventilateur (26) est disposé du côté aval, par rapport au radiateur (25R), de l'écoulement d'air (Fr) ; et
dans laquelle la section (78) de communication place un espace (36) entre le ventilateur (26) et le radiateur (25R), et le côté aval, par rapport à l'échangeur de chaleur (66), de l'écoulement d'air (Fa), en communication l'un avec l'autre.

3. Structure (10) selon la revendication 1 ou la revendication 2 d'échange de chaleur de véhicule,
dans laquelle le radiateur (25R) est disposé du côté arrière, dans la direction avant-arrière de véhicule, de l'unité motrice (12) et du côté avant, dans la direction avant-arrière de véhicule, du ventilateur (26),
dans laquelle l'échangeur de chaleur (66) est disposé du côté arrière, dans la direction avant-arrière de véhicule, de l'unité motrice (12) et du côté supérieur, dans la direction haut-bas de véhicule, du radiateur (25R),
dans laquelle le dispositif (40) de climatisation comprend un carter (48) et une soufflante (60 ; 62), dans laquelle le carter (48) loge l'échangeur de chaleur (66) et est conformé avec un orifice de sortie d'air (48Co ; 48Ho) du côté compartiment de véhicule, et dans laquelle la soufflante (60 ; 62) est disposée à l'intérieur du boîtier (48) du côté opposé au côté orifice de sortie d'air par rapport à l'échangeur de chaleur (66), et
dans laquelle la section (78) de communication comprend un conduit d'évacuation qui s'étend depuis une ouverture d'évacuation (48E) jusqu'à un espace (36) entre le radiateur (25R) et le ventilateur (26), dans laquelle l'ouverture d'évacuation (48E) est formée dans le carter (48) entre l'échangeur de chaleur et l'orifice d'évacuation d'air (48Co ; 48Ho), et dans laquelle le conduit d'évacuation est ouvert et fermé par le mécanisme (80) d'ouverture et de fermeture.

4. Structure (10 ; 100) selon l'une quelconque des revendications 1 à 3 d'échange de chaleur de véhicule, dans laquelle le dispositif (40) de climatisation est constitué en incluant un évaporateur qui est constitué pour refroidir un écoulement d'air et un coeur de réchauffeur (66) qui est constitué pour chauffer un écoulement d'air.
